# EUROPEAN PATENT APPLICATION

(11) **EP 1 072 904 A2**
(43) Date of publication of application: **31.01.2001**
(21) Application number: 00306426.8
(22) Date of filing: 27.07.2000
(51) Int. Cl.: G01W 1/02

(54) **Environmental data logging and transmission system**

(30) Priority: 27.07.1999 GB 9917559
(71) Applicant: Davison, Angus James, Ledbury, Herefordshire HR8 2PY (GB); Turner, Simon, Biggleswade, Bedfordshire SG18 8TU (GB); Saunders, Spencer, Biggleswade, Bedfordshire SG18 0LU (GB)
(72) Inventor: Davison, Angus James, Ledbury, Herefordshire HR8 2PY (GB); Turner, Simon, Biggleswade, Bedfordshire SG18 8TU (GB); Saunders, Spencer, Biggleswade, Bedfordshire SG18 0LU (GB)
(74) Representative: Bailey, Richard Alan

(57) **Abstract**

An environmental data logging and transmission system comprises a field unit (10) having sensors adapted to monitor various environmental parameters, and a transmitter for transmitting data to a base station (12), the base station (12) logging the data and transmitting a warning to a receiver unit (14) in the event that one or more of the parameter values falls outside of a predetermined range. The warning takes the form of an electrically transmitted data message.

## Description

This invention relates to a system for use in logging and transmitting data representative of environmental conditions at a given location.

In order to optimise agricultural crop production, it is desirable to be able to log environmental conditions at a particular site, and to be able to transmit data representative of the conditions to permit action to be taken in the event that adverse environmental conditions are experienced.

Weather stations permitting the logging of data representative of environmental conditions are well known. Likewise, warning devices designed to trigger an alarm if a given meteorological parameter falls outside of a given range are well known.

It is an object of the invention to provide a system whereby a number of meteorological, physical or other parameters at a given location or locations can be monitored, and a warning sent to an operator in the event that adverse conditions are experienced.

According to the present invention there is provided an environmental data logging and transmission system comprising a field unit arranged to monitor a range of environmental parameters and to transmit data representative of the sensed values of the parameters to a base station, the base station being arranged to log the values of the parameters, to compare the values of the parameters to predetermined acceptable levels, and to trigger a warning in the event that one or more of the parameter values falls outside of the appropriate acceptable levels, wherein the warning takes the form of a data message transmitted electrically to an appropriate receiver unit.

The receiver unit may take the form of a mobile telephone, conveniently capable of receiving text messages, e-mail and/or WAP data. Alternatively, the receiver unit may comprise a computer capable of receiving text messages, e-mail or internet data. Of course, the manner in which the warning is transmitted may take forms other than those mentioned above.

It will be appreciated that by transmitting the warning in this manner, an operator can be advised not only that a parameter value is outside of an acceptable range, but also be provided with current or historic environmental data, thus assisting the operator in determining what action to take.

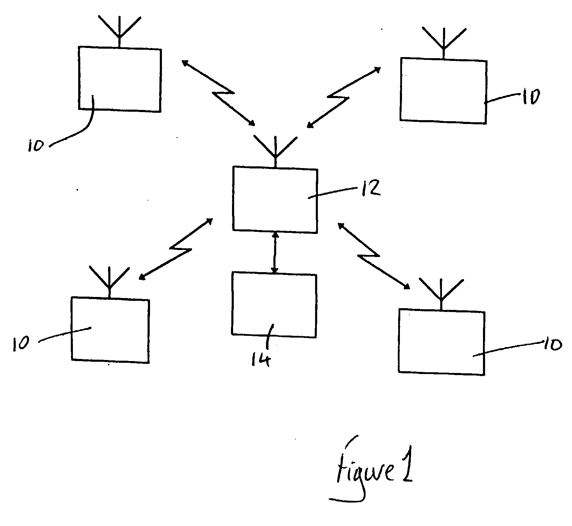

The invention will further be described by way of example, with reference to the accompanying drawing (Figure 1) which is a diagrammatic view of an environmental data logging and transmission system in accordance with an embodiment of the invention.

The environmental data logging and transmission system illustrated in Figure 1 comprises four field units 10, a base unit 12 and a receiver unit 14. Although four field units are illustrated, the system may include fewer or a greater number of field units if desired. Each field unit 10 includes a number of sensors for sensing the values of various environmental parameters. By way of example, the parameters sensed by the various sensors may include temperature, relative humidity, wind speed and direction, rain fall, solar radiation and soil moisture. The range of parameters may be modified by introducing additional sensors and re-programming the field unit as necessary. Each field unit 10 is positioned at a location in which the environmental parameters are to be sensed. Each field unit is conveniently designed to be self-powered, for example using a solar power arrangement to charge a battery or capacitor such that no power cable needs to be connected to the field unit 10. The solar power generator arrangement should permit sufficient electrical charge to be generated to allow the unit to operate for at least 20 days without requiring external charging of the battery or capacitor. The design of each field unit 10 is such that it is able to withstand the environmental conditions to which it is to be exposed such that, for example, damage to the circuitry of the field unit 10 due to ingress of rain water is avoided. Each field unit 10 should therefore be low maintenance and capable of being left in position for extended periods of time.

Each field unit 10 includes a memory capable of storing data derived from the various sensors, a clock to permit time/date recording and a transmitter arranged for use in transmission of the stored data to the base unit 12. The transmission of data to the base unit 12 occurs at regular intervals. For example, the data may be transmitted to the base unit 12 on a daily or weekly basis. In order to ensure that data is not lost, the data stored by the field unit 10 is stored using a non-volatile storage arrangement such that should the power supply for the field unit 10 fail, the data is not lost.

The base unit 12 is designed to monitor and log the data received from the various field units 10. When monitoring the incoming data, the data is compared with appropriate pre-determined acceptable ranges for the various parameters. In the event that one or more of the sensed environmental parameters falls outside of the appropriate pre-determined acceptable range, then the base unit 12 is arranged to trigger a warning. The warning is transmitted to a receiver unit 14 in the form of a data message transmitted electrically. By way of example, the data message may comprise a text message transmitted to a mobile telephone, or it may comprise an e-mail message or data in WAP format intended to be received by an appropriate mobile telephone. Alternatively, the receiver unit 14 may take the form of a computer, conveniently a lap-top computer, including a modem to permit data to be transmitted thereto, for example in the form of a text message, an e-mail or in the form of data in internet readable format.

The warning transmitted to the receiver unit 14 could simply indicate that one of the parameters has fallen outside of its appropriate pre-determined range. However it will be appreciated that a significantly greater quantity of information may be transmitted to the unit 14, if desired. For example, all or a selection of the environmental parameters values of one or more of the field units 10 may be transmitted to the receiver unit 14, and historical as well as the current parameter values may be transmitted, if desired. Using the information supplied to the receiver unit 14, an operator may be able to take appropriate action to avoid the loss of crops.

The manner in which data is transmitted between the field units 10 and the base unit 12 conveniently allows two directional data transfer. By using such a technique, the data may be encoded in such a manner as to permit error detection and thus appropriate correction or re-transmission of data may be achieved, if necessary.

Although several techniques for transmission of the warnings to the receiver unit 14 have been described, it will be appreciated that a number of alternative techniques could be used for the electronic transmission of a data message to a receiver unit 14, and the invention is not limited to the arrangements described hereinbefore.

As well as transmitting a warning to the receiver unit 14, data may be transmitted to the receiver unit 14 even when all of the parameter values fall within the acceptable limits, thereby permitting remote monitoring of the environmental conditions by an operator.

## Claims

1. An environmental data logging and transmission system comprising a field unit (10) arranged to monitor a range of environmental parameters and to transmit data representative of the sensed values of the parameters to a base station (12), the base station (12) being arranged to log the values of the parameters, to compare the values of the parameters to pre-determined acceptable levels, and to trigger a warning in the event that one or more of the parameter values falls outside of the appropriate acceptable levels, characterised in that the warning takes the form of a data message transmitted electrically to an appropriate receiver unit (14).

2. A system as claimed in Claim 1, wherein the warning takes the form of a text message, an e-mail message, or data transmitted in WAP or internet readable form.

3. A system as claimed in Claim 1 or Claim 2, wherein the receiver unit (14) comprises a mobile telephone.

4. A system as claimed in Claim 1 or Claim 2, wherein the receiver unit (14) comprises a computer.

5. A system as claimed in any one of the preceding claims, wherein the range of environmental parameters includes at least one of temperature, relative humidity, wind speed and direction, rainfall, solar radiation and soil moisture.

6. A system as claimed in any one of the preceding claims, wherein the field unit is internally powered and includes a solar electrical generator.

7. A system as claimed in any one of the preceding claims, further comprising at least one additional field unit (10).
